# EUROPÄISCHE PATENTANMELDUNG

(11) **EP 1 035 714 A2**
(43) Veröffentlichungstag der Anmeldung: **13.09.2000**
(21) Anmeldenummer: 00103953.6
(22) Anmeldetag: 25.02.2000
(51) Int. Cl.: H04M 3/42

(54) **Telekommunikations-Vermittlungsanlage und Telekommunikationssystem**

(30) Priorität: 06.03.1999 DE 19909956
(71) Anmelder: ROBERT BOSCH GMBH, 70442 Stuttgart (DE)
(72) Erfinder: Haack, Reiner, 60486 Frankfurt am Main (DE)

(57) **Zusammenfassung**

Bei einer Telekommunikations-Vermittlungsanlage (1) mit einer Schnittstelle (5) zum Empfang von Steuerinformationen betreffend den Aufbau von Verbindungen zwischen Endgeräten (2) von einer Datenverarbeitungsanlage (6,7,8) ist vorgesehen, daß die Schnittstelle (5) zum Senden von Verbindungsdaten betreffend den Auf- und Abbau und/oder Bestand von Verbindungen zwischen wenigstens zwei Endgeräten (2) an die Datenverarbeitungsanlage (6,7,8) eingerichtet ist.

## Beschreibung

### Stand der Technik

Die Erfindung betrifft eine Telekommunikations-Vermittlungsanlage zum selektiven Verbinden einer Mehrzahl von daran angeschlossenen Endgeräten untereinander, die eine Schnittstelle zum Empfang von Steuerinformation betreffend den Aufbau von Verbindungen zwischen Endgeräten von einer Datenverarbeitungsanlage aufweist, und ein Telekommunikationssystem, das eine solche Vermittlungsanlage verwendet.

Vermittlungsanlagen der genannten Art werden verwendet, um Wählvorgänge zu vereinfachen und zu beschleunigen, zum Beispiel dadurch, daß ein Benutzer die Rufnummer eines externen Teilnehmers, mit dem er sprechen will, in einer Datenbank der Datenverarbeitungsanlage suchen läßt und die Datenverarbeitungsanlage, sobald die Rufnummer gefunden ist, diese an die Vermittlungsanlage übermitteln läßt, um letztere zu veranlassen, eine Kommunikationsverbindung zu der betreffenden Rufnummer aufzubauen.

Hier findet zwar eine Steuerung der Vermittlungsanlage durch den Computer statt, eine Einbindung des Computers in die Komfortfunktionen, die Telekommunikations-Vermittlungsanlagen neuerer Bauart anbieten, erfolgt jedoch nicht. Wenn zum Beispiel ein Benutzer einen durch ein computergestütztes Wählverfahren angerufenen Gesprächspartner mit einem anderen Endgerät der Vermittlungsanlage weiterverbinden möchte, so muß er zu diesem Zweck vom Computer an das Telefon wechseln, um dort die erforderlichen Handgriffe vorzunehmen. Manche Vermittlungsanlagen bieten ferner die Möglichkeit, an einem Telefon direkt anzuzeigen, ob ein weiteres angeschlossenes Endgerät zum aktuellen Zeitpunkt besetzt ist, so daß der Benutzer von vornherein feststellen kann, daß er ein Gespräch an dieses Endgerät nicht weitervermitteln kann, noch bevor er den Versuch dazu unternimmt. Auch solche Funktionen sind beim computerunterstützten Wählen nicht verfügbar.

### Vorteile der Erfindung

Durch die vorliegende Erfindung wird eine Telekommunikations-Vermittlungsanlage beziehungsweise ein Telekommunikationssystem geschaffen, die es ermöglichen, sämtliche Komfortfunktionen einer modernen Vermittlungsanlage über eine Datenverarbeitungsanlage, insbesondere über einen Arbeitsplatzrechner nutzbar zu machen. Aufgrund der gegenüber einem Telefon-Display überlegenen grafischen Darstellungsmöglichkeiten eines Bildschirms eines Arbeitsplatzrechners werden dadurch viele dieser Komfortfunktionen einer grafisch orientierten, intuitiven Benutzerführung zugänglich, was manche dieser Funktionen für eine ungeübten Benutzer erst nutzbar macht. Ein weiterer Vorteil ergibt sich daraus, daß auf Spezialausstattungen der an die Vermittlungsanlage angeschlossenen Endgeräte wie etwa spezielle Funktionstasten und Anzeigeelemente vollständig verzichtet werden kann, weil die entsprechenden Eingabe- und Anzeigemöglichkeiten problemlos auf der Datenverarbeitungsanlage zur Verfügung gestellt werden können.

Da dies die Verwendung preiswerter Standardendgeräte anstelle von spezialisierten, möglicherweise eigens für die Nutzung bestimmter Komfortfunktionen der Vermittlungsanlage entwickelter Endgeräte ermöglicht, können die Anschaffungskosten eines Telekommunikationssystems gering gehalten werden.

Dies läßt sich bei einer Telekommunikations-Vermittlungsanlage der eingangs genannten Art dadurch erreichen, daß die Schnittstelle zusätzlich zum Senden von Verbindungsdaten betreffend den Auf- und Abbau und/oder Bestand von Verbindungen zwischen wenigstens zwei Endgeräten an die Datenverarbeitungsanlage eingerichtet ist. Die Datenverarbeitungsanlage des erfindungsgemäßen Kommunikationssystems ist vorzugsweise ein Rechnernetz, das eine Mehrzahl von Arbeitsplatzrechnern umfaßt, die jeweils einem Endgerät des Telekommunikationssystems zugeordnet sind und diejenigen von der Vermittlungsanlage gesendeten Verbindungsdaten auswerten, die das zugeordnete Endgerät betreffen, und für einen Benutzer sichtbar darstellen. Zu diesen Verbindungsdaten gehört zum Beispiel die Ausgabe eines Klingelzeichens an das Endgerät, eventuell in Verbindung mit der Rufnummer eines Anrufers, sofern dieser vom anrufenden Endgerät signalisiert wird. Der Umfang der das Endgerät betreffenden Verbindungsdaten kann allerdings unterschiedlich sein, je nach Umfang der von der Vermittlungsanlage angebotenen Komfortfunktionen. Wenn zu diesen Komfortfunktionen zum Beispiel eine Partnerfunktion gehört, bei der der Besetzt- oder Freizustand eines Partnerendgeräts oder eine Meldung, daß am Partnerendgerät ein Anruf ankommt, von der Vermittlungsanlage an das betreffende Endgerät übermittelt werden, gehören selbstverständlich auch diese Informationen zu den das Endgerät betreffenden Verbindungsdaten.

Da im erfindungsgemäßen Telekommunikationssystem die Vermittlungsanlage Komfortfunktionen auch in Zusammenarbeit mit Endgeräten realisieren kann, die keine für diese Funktionen benötigten Bedien- und Anzeigeelemente aufweisen, ergibt sich insbesondere die Möglichkeit, ein Telekommunikationssystem zu schaffen, bei dem wenigstens ein Endgerät über ein öffentliches Fernmeldenetz an die Vermittlungsanlage angeschlossen ist und ein dem Endgerät zugeordneter Arbeitsplatzrechner über eine DFÜ-Verbindung in das Rechnernetz eingebunden ist. Hierdurch ergibt sich zum Beispiel die Möglichkeit, an einem Heimarbeitsplatz eines Mitarbeiters, der keine direkte Verbindung zur Vermittlungsanlage aufweist, sämtliche Funktionen zu implementieren, die diese unterstützt, unabhängig von Typ und Bauart eines dort vorhandenen Endgeräts.

Weitere Merkmale und Vorteile der Erfindung ergeben sich aus der nachfolgenden Beschreibung von Ausführungsbeispielen mit Bezug auf die beigefügten Figuren.

### Figuren

- Figur 1: zeigt schematisiert ein Telekommunikationssystem nach einer ersten Ausgestaltung der Erfindung;
- Figur 2: zeigt ein Beispiel für eine Bildschirmdarstellung auf einem Arbeitsplatzrechner des Telekommunikationssystems; und
- Figur 3: zeigt eine zweite Ausgestaltung eines Telekommunikationssystems.

### Beschreibung von Ausführungsbeispielen

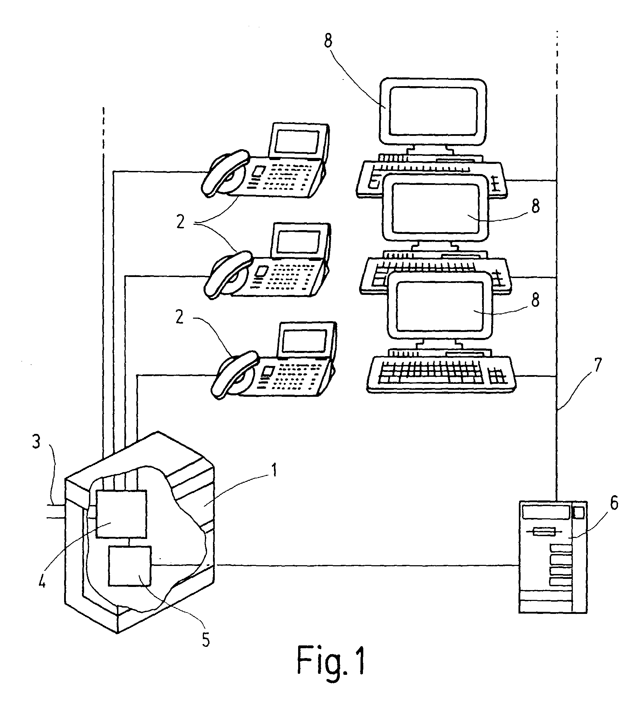

Das Telekommunikationssystem aus Figur 1 umfaßt eine Vermittlungsanlage 1, die dazu dient, eine Mehrzahl von angeschlossenen Endgeräten 2 selektiv miteinander oder über Amtsleitungen 3 mit entfernten Endgeräten über ein öffentliches Fernmeldenetz zu verbinden. Diese Aufgaben werden von einer Vermittlungssteuerung 4 innerhalb der Vermittlungsanlage 1 ausgeführt. Die Vermittlungsanlage 1 enthält ferner eine Schnittstelle 5, die Verbindungsdaten, die die Vermittlungssteuerung 4 über die Amtsleitungen 3 oder von einem der Endgeräte 2 empfängt, in Echtzeit an einen ersten Rechner eines Rechnernetzes weitergibt, der hier als Server 6 bezeichnet wird. Der Server 6 ist programmiert, um die von der Schnittstelle 5 empfangenen Daten in einer Form auf einem Bus 7 zur Verfügung zu stellen, in der sie von an den Bus angeschlossenen Arbeitsplatzrechnern 8 verarbeitbar sind. Zu diesen Daten gehören Signalisierungsdaten von auf den Amtsleitungen 3 eintreffenden Gesprächen, von den Endgeräten 2 an die Vermittlungsanlage 2 übermittelte Wählinformation, Information über den Zustand frei oder besetzt der Endgeräte 2, etc.

Jedem Endgerät 2 ist ein Arbeitsplatzrechner 8 zugeordnet, die Zuordnung von Kennungen der Endgeräte und der Arbeitsplatzrechner ist im Server 6 gespeichert. So ist dieser in der Lage, Datenpakete mit ein Endgerät 2 betreffenden Verbindungsdaten an den zugeordneten Arbeitsplatzrechner 8 zu adressieren.

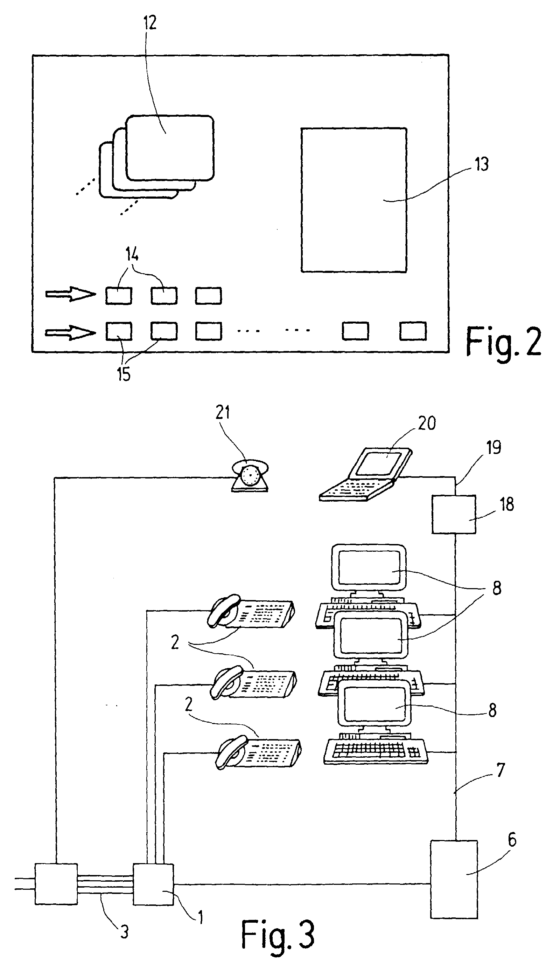

Die Arbeitsplatzrechner 8 verfügen über ein Programm, das sie in die Lage versetzt, die vom Server 6 gelieferten Informationen wenigstens zeitweilig einem Benutzer an einem Bildschirm darzustellen. Figur 2 zeigt ein Beispiel für eine mögliche Bildschirmmaske dieser Darstellung. Die Bildschirmmaske enthält mehrere gestaffelt angeordnete Fenster 12, die ein Profil eines Gesprächspartners anzeigen.

Dieses Profil kann Informationen wie zum Beispiel Namen, Funktion, Organisationszugehörigkeit etc. eines anrufenden oder angerufenen Gesprächspartners enthalten, die von dem Arbeitsplatzrechner 8 bei Bedarf aus einer Datenbank abgefragt werden. Das zuoberst liegende Fenster 12 zeigt das Profil eines Gesprächspartner, mit dem eine Verbindung besteht oder soeben aufgebaut wird. Teilweise verdeckte Fenster können, sofern vorhanden, zu Gesprächen gehören, die sich in einem Parkzustand befinden, oder die Profile von Anrufern enthalten, die zu einem früheren Zeitpunkt vergeblich versucht haben, den Benutzer zu erreichen und rückgerufen werden müssen. Die zum Erzeugen dieser Fenster 12 erforderliche Information, insbesondere die Nummer eines Anrufers, die der Arbeitsplatzrechner 8 benötigt, um das Profil in der Datenbank zu finden, wird dem Arbeitsplatzrechner 8 von der Vermittlungsanlage 1 über den Server 6 zur Verfügung gestellt.

Ein zweites Fenster 13, von dem hier keine Details dargestellt sind, stellt das Tastenfeld eines Telefons dar. Die Anordnung der Tasten in diesem Fenster wird zweckmäßigerweise einem üblicherweise mit der Vermittlungsanlage 1 verwendeten Systemtelefon entsprechen, um einem mit diesen Telefonen vertrauten Benutzer die Bedienung des Fensters 13, zum Beispiel durch Anklicken einzelner dargestellter Tasten mit einer Maus, möglichst einfach zu machen. Im Gegensatz zum Telefon besteht aber bei den im Fenster 13 dargestellten Tastenfeld die Möglichkeit, programmierbare Funktionstasten oder Tasten, deren Funktion davon abhängt, welche Tasten zu einem früheren Zeitpunkt gedrückt wurden, zu jedem Zeitpunkt mit einer Beschriftung zu versehen, die die aktuell mit ihnen aufrufbare Funktion angibt.

Zwei Zeilen von Buttons 14,15 sind am unteren Rand der Bildschirmmaske angeordnet. Die Buttons 14 stehen jeweils für ein Endgerät, das zusammen mit dem Endgerät, das dem die Anzeigen von Figur 2 darstellenden Arbeitsplatzrechner zugeordnet ist, einer gemeinsamen Partnergruppe angehört. Da die Vermittlungsanlage 1 und der Server 6 dem Arbeitsplatzrechner alle Signalisierungsinformationen über den Zustand besetzt oder frei, ankommende Anrufe, etc. der Telefone der Partnergruppe liefern, können diese Informationen durch entsprechende Veränderung der Darstellung des zugeordneten Buttons 14 sichtbar gemacht werden. Dem Benutzer des Arbeitsplatzrechners kann so zum Beispiel durch Blinken des Buttons das Läuten des dem Button entsprechenden Telefons oder durch Farbwechsel der Besetztzustand kenntlich gemacht werden. Durch Anklicken des Buttons mit einer Maus kann eine Gesprächsverbindung mit dem Partnertelefon hergestellt oder ein bereits bestehendes Gespräch an dieses weitervermittelt werden. Entsprechende Signalisierungsinformationen werden vom Arbeitsplatzrechner über den Server 6 an die Vermittlungsanlage 1 übertragen und von dieser ausgeführt.

Die Buttons 15 der zweiten Zeile sind jeweils einer der Amtsleitungen 3 zugeordnet und zeigen zum Beispiel durch ihre Färbung den Frei- oder Besetztzustand der Leitung an. Durch Anklicken des Buttons 15 einer freien Leitung kann der Benutzer auf die entsprechende Amtsleitung zugreifen.

Figur 3 zeigt eine weiterentwickelte Variante des Telekommunikationssystems aus Figur 1, bei der die erweiterten Möglichkeiten, die sich aus der Steuerung von Komfortfunktionen der Vermittlungsanlage von den Arbeitsplatzrechnern aus ergeben, in besonders vorteilhafter Weise zum Tragen kommen. Elemente dieses Telekommunikationssystems, die den in Figur 1 gezeigten entsprechen, sind mit gleichen Bezugszeichen versehen und werden nicht erneut beschrieben. Das aus Server 6, Bus 7 und Arbeitsplatzrechnern 8 bestehende Rechnernetz ist hier um eine DFÜ-Schnittstelle 18 erweitert, mittels derer ein externer Arbeitsplatzrechner 20 über ein Datenfernübertragungsnetz 19 in das Rechnernetz einbindbar ist. Die DFÜ-Schnittstelle 18 kann zum Beispiel ein Internet-Server und das Datenfernübertragungsnetz 19 das Internet sein. Grundsätzlich könnte die DFÜ-Schnittstelle 18 aber auch eine ISDN-Karte oder im einfachsten Falle ein Modem an einem Rechner des Rechnernetzes und das Netzwerk 19 ein öffentliches Fernmeldenetz sein. Der externe Arbeitsplatzrechner 20 kann, nachdem er sich gegenüber dem Rechnernetz als zugangsberechtigt ausgewiesen hat, in gleicher Weise Signalisierungsdaten der Vermittlungsanlage 1 über den Server 6 empfangen und Steuerbefehle an diese senden, wie die direkt an den Bus 7 angebundenen Arbeitsplatzrechner 8.

Allerdings ist dem externen Arbeitsplatzrechner 20 keines der direkt an die Vermittlungsanlage 1 angeschlossenen Endgeräte 2 mit einer anlageninternen Rufnummer zugeordnet, sondern ein externes Endgerät 21, das nur über ein öffentliches Fernmeldenetz 22 mit der Vermittlungsanlage 1 verbindbar ist. Der externe Rechner 20 ist - in der gleichen Weise programmiert wie die Arbeitsplatzrechner 8 - in der Lage, über den Server 6 der Vermittlungsanlage 1 zum Beispiel einen Befehl zum Herstellen einer Verbindung zwischen dem externen Endgerät 21 und einem der direkt angeschlossenen Endgeräte 2 herzustellen. Dieser Befehl unterscheidet sich für die Vermittlungsanlage 1 nicht von einem von einem der Arbeitsplatzrechner 8 empfangenen Befehl zum Herstellen einer Verbindung von einem der Endgeräte 2 ins öffentliche Fernmeldenetz 22. Auf diese Weise ist ein Mitarbeiter im Außendienst oder von einem Arbeitsplatz daheim aus in der Lage, Gespräche mit seinem Betrieb von einem beliebigen Anschluß des öffentlichen Fernmeldenetzes 22 auf Betriebskosten zu führen.

Da alle Signale, die zum Steuern von Komfortfunktionen der Vermittlungsanlage 1 benötigt werden, dieser von dem externen Arbeitsplatzrechner 20 in gleicher Weise wie von einem Arbeitsplatzrechner 8 geliefert werden können, kann der externe Mitarbeiter sie sämtlich nutzen, unabhängig davon, welche Funktionen das von ihm benutzte Endgerät 21 von sich aus zu unterstützen in der Lage ist. Ohne Benutzung des externen Rechners 20 hingegen wäre die Nutzung dieser Komfortfunktionen in der Regel unmöglich, weil für deren Signalisierung über das öffentliche Fernmeldenetz 22 kein Protokoll zur Verfügung steht.

Das externe Endgerät 21 und der externe Rechner 20 können somit in gleicher Weise in Partnergruppen des Telekommunikationssystems eingegliedert sein, wie ein direkt angeschlossenes Endgerät 2 beziehungsweise ein an den Bus 7 angeschlossener Arbeitsplatzrechner 8. Gespräche können so in für die Mitarbeiter völlig transparenter Weise zwischen Endgeräten in einer Partnergruppe hin und her vermittelt werden.

Gesprächsverbindungen zwischen dem externen Mitarbeiter und einem ans öffentliche Fernmeldenetz 22 angeschlossenen Gesprächspartner werden aufgebaut, indem auf einen vom externen Rechner 20 empfangenen Befehl die Vermittlungsanlage 1 zunächst jeweils eine Verbindung zum externen Endgerät 21 und zum Gesprächspartner aufbaut und diese zwei Verbindungen intern verknüpft. Es ergibt sich so eine Situation wie bei einer Anrufweiterschaltung, bei der eine Kommunikationsverbindung zwischen zwei Endgeräten des öffentlichen Fernmeldenetzes 22 über die Vermittlungsanlage 1 verläuft.

Die für die Verständigung des Benutzers mit der Vermittlungsanlage 1 über einen Arbeitsplatzrechner benutzte Bildschirmmaske ist für den externen Rechner 20 die gleiche wie für die an den Bus 7 angeschlossenen Arbeitsplatzrechner 8. Somit ergeben sich keine Unterschiede in der Bedienung des Systems, völlig unabhängig von der Art des zur Verfügung stehenden externen Endgeräts 21.

Da die Bedienbarkeit des Telekommunikationssystems nicht mehr von der Art des verwendeten Endgeräts abhängt, können als Endgeräte selbstverständlich auch mobile Endgeräte eingesetzt werden, wobei die Anbindung dieser Geräte sowohl über eine direkt an die Vermittlungsanlage 1 angeschlossene Basisstation als auch über ein öffentliches Mobilfunknetz erfolgen kann.

## Patentansprüche

1. Telekommunikations-Vermittlungsanlage zum selektiyen Verbinden einer Mehrzahl von daran angeschlossenen Endgeräten (2,21) untereinander, mit einer Schnittstelle (5) zum Empfang von Steuerinformation betreffend den Aufbau von Verbindungen zwischen Endgeräten (2,21) von einer Datenverarbeitungsanlage (6,7,8,18,20), **dadurch gekennzeichnet,** daß die Schnittstelle (5) zum Senden von Verbindungsdaten betreffend den Auf- und Abbau und/oder Bestand von Verbindungen zwischen wenigstens zwei Endgeräten (2,21) an die Datenverarbeitungsanlage (6,7,8,18,20) eingerichtet ist.

2. Telekommunikationssystem, **gekennzeichnet durch** eine Telekommunikations-Vermittlungsanlage (1) nach Anspruch 1, eine Mehrzahl von an diese Vermittlungsanlage angeschlossenen und selektiv miteinander und gegebenenfalls mit einem zweiten, externen Telekommunikationssystem (22) verbindbaren Endgeräten (2) und einer an die Schnittstelle (5) angeschlossenen Datenverarbeitungsanlage (6,7,8).

3. Telekommunikationssystem nach Anspruch 2, **dadurch gekennzeichnet,** daß die Datenverarbeitungsanlage (6,7,8) ein Rechnernetz ist, das eine Mehrzahl von Arbeitsplatzrechnern (8) umfaßt, die jeweils einem Endgerät (2) des Telekommunikationssystems zugeordnet sind und diejenigen unter den von der Vermittlungsanlage (1) gesendeten Verbindungsdaten auswerten, die das zugeordnete Endgerät (2) betreffen, und für einen Benutzer sichtbar darstellen.

4. Telekommunikationsnetz nach Anspruch 3**, dadurch gekennzeichnet,** daß die Arbeitsplatzrechner (8) eingerichtet sind, Befehle zum Verbinden des zugeordneten Endgeräts (2) mit wenigstens einem weiteren Endgerät an die Vermittlungsanlage (1) zu senden.

5. Telekommunikationssystem nach Anspruch 3 oder 4, **dadurch gekennzeichnet,** daß ein Arbeitsplatzrechner (8) und das ihm zugeordnete Endgerät (2) jeweils an einem gleichen Arbeitsplatz angeordnet sind.

6. Telekommunikationssystem nach einem der Ansprüche 2 bis 5, **dadurch gekennzeichnet,** daß wenigstens ein Endgerät (21) über ein öffentliches Fernmeldenetz (22) an die Vermittlungsanlage (1) angeschlossen ist, und daß ein dem Endgerät (21) zugeordneter Arbeitsplatzrecher (20) über eine Datenfernübertragungsverbindung (19) in das Rechnernetz eingebunden ist.
